# EUROPEAN PATENT APPLICATION

(11) **EP 2 876 374 A1**
(43) Date of publication of application: **27.05.2015**
(21) Application number: 14191997.7
(22) Date of filing: 06.11.2014
(51) Int. Cl.: F24C 15/16, A23L 3/40

(54) **A cooking device having a dehydrating apparatus**

(30) Priority: 19.11.2013 TR 201313399
(71) Applicant: BSH Hausgeräte GmbH, 81739 München (DE)
(72) Inventor: Oktay, Nurcan, 59500 TEKIRDAG (TR); Sürer, Sevgi, 59850 TEKIRDAG (TR); Tasdemir, Burcu, 59500 TEKIRDAG (TR); Ölmez Kerküklü, Yakut, 34290 ISTANBUL (TR)

(57) **Abstract**

The invention is a cooking device (1) particularly a household oven to dehydrate moisture containing foodstuff (40) disposed in a cooking chamber (11) by means of dryer air circulated or blown in the cooking chamber (11) in a dehydration mode at the cooking chamber (11) surrounded by an outer body (10). A dehydrating apparatus (30) in the cooking chamber (11) is having at least one storage platform (31) in a wire form and positioned to keep a distance (x) with the walls (16) of the cooking chamber (11) and rotatable inside the cooking chamber (11) from a fulcrum (60), so that providing efficient surface contact of drying air to dryable foods.

## Description

The invention relates to cooking devices which permits the cooking and/or dehydration of dryable foodstuff substances such as vegetable and fruit. The invention particularly relates to a domestic oven capable of drying dryable foodstuffs.

Storage members such as a tray or a grill suitable for drying or cooking, or methods of cooking, have been formed to carry foodstuffs which are dryable such as fruit and vegetables. In existing methods the dehydration of foodstuffs is performed in or on carrying members such as trays and grills. The life of dehydrated foodstuffs, that is, foodstuffs which have had significant amounts of moisture removed from their structure, is significantly extended compared with foodstuffs which have not been dehydrated.

With current equipment and methods, foodstuffs are dehydrated on a tray by spreading them over grease-proof paper on a tray-type carrying member for the dehydration of foodstuffs. Another method is to dehydrate the foodstuffs by spreading or placing them on grill-type carrying member. In either case, a door of the oven has to be opened and the position of the foodstuffs turned in order to ensure that each surface of the foodstuffs is dehydrated. However, loss of efficiency and energy occur when a door of the oven is opened due to the hot air movement through the ambient. Also, the periodical monitoring inside the cooking chamber and the change position of the foodstuff is time consuming

The tray and/or grill-type tray embodiments in the background art can be seen from the patent application files with according numbers.

According to the DE102008041525 patent publication in, a tray is anticipated at which foodstuffs may be disposed. The tray is supported from the edges by carrying elements in the form of rods on the opposite walls of the cooking chamber. The carrying elements comprise two parallel vertical rods and parallel rods extending horizontally between them. Each pair of horizontal rods is arranged close together. The distance between the close rods is wide enough to slide a tray by its edge. In other words, a guide rail for a tray is provided between the two rods. The lower rod from one of the two rods, ensures that the tray is supported against gravity. The upper rod prevents tipping over by the weight of the food on the tray when the tray is pulled out of the cooking chamber.

Object of the invention is providing efficient dehydration by the drying air within a cooking chamber of a domestic cooking device

Another object of the invention is increasing dehydration efficiency by exposing foodstuff equally to the drying air by hanging the foodstuff or and where necessary, rotating thereof within the cooking chamber, in a manner that the foodstuff are stored inside the cooking chamber accordingly.

In order to achieve above objectives, the invention relates to cooking device particularly a household oven to dehydrate moisture containing foodstuff disposed in a cooking chamber by means of dryer air circulated or blown in the cooking chamber in a dehydration mode at the cooking chamber surrounded by an outer body. The cooking device comprises a dehydrating apparatus in the cooking chamber, having at least one storage platform in a wire form and positioned to keep a distance (x) with the walls of the cooking chamber and rotatable inside the cooking chamber from a fulcrum, so that providing efficient surface contact of drying air to dryable foods.

In this way, effective dehydrating of the foodstuffs can be completed within optimum periods of time and at optimum drying air temperatures. The storage platform at a distance from the walls of the cooking chamber, increases the circulation area for the drying air. Also, a free rotation ability provided for the storage platform enhances the benefitting equally from the dryer air.

The optimum dehydrating conditions for each foodstuff vary according to the type of foodstuff and especially according to the proportion of moisture existing within the structure of the foodstuff.

In a possible embodiment of the invention, the storage platform of the dehydrating apparatus is detachable inside the cooking chamber. Thus the dehydrating apparatus can be detached to the cooking device and easily cleaned, and also laying out and taking of the foodstuffs can be provided at a more convenient platform.

In another possible embodiment of the invention, the fulcrum of the storage platform of the dehydrating apparatus having the foodstuffs arranged in order, is a centre of gravity. Thus, the foodstuffs may be held in balance in a hanger on the dehydrating apparatus.

In another possible embodiment of the invention, the storage platform comprises a number of openings providing to hang the foodstuffs thereon. Thus, the foodstuffs may be hung directly through the openings or with the assistance of an element. The element which assists the hanging may be a thread, a hook or a latch.

In another possible embodiment of the invention, the storage platform comprises a number of hooks providing to hang the foodstuffs thereon. Thus, the foodstuffs which are to be dehydrated benefit to the maximum rate from the drying air within the cooking chamber. The hooks are fixed on the storage platform.

In another possible embodiment of the invention, the storage platform is a hanger. Thus, the foodstuffs are hung on the storage platform to dehydrate. The storage platform may be circular, straight, square or in other geometrical shapes.

In another possible embodiment of the invention, the storage platform is a rod. Thus, it is provided that to dispose of large dimension foodstuffs and also to dehydrate foodstuffs passed through the rod.

In another possible embodiment of the invention, the drying apparatus comprises a carrying element positioning the storage platform in the cooking chamber in a manner connected to the storage platform(s). Thus, the carrying element provides to hang the storage platform on the hanger and, where necessary, transmits the rotation movement to the storage platform.

In another possible embodiment of the invention, the carrying element comprises at least one bent part providing to position and hang to at least one storage platform and a projection providing to hang the storage platform in the cooking chamber.

In another possible embodiment of the invention, the dehydrating apparatus comprises at least one support extension connected to the carrying element for hanging the storage platform. Thus, the storage platform/platforms can be disposed at a distance far from the central rotation axis where rotation is provided.

In another possible embodiment of the invention, the cooking device comprises a support which provides positioning of the dehydrating apparatus in a manner supporting from a bottom wall of the cooking chamber. Thus the storage platform/platforms can be disposed on a central rotation axis where rotation is provided.

In another possible embodiment of the invention, the cooking device comprises a hanger which provides positioning of the dehydrating apparatus in a manner hanging from a top wall of the cooking chamber. Thus, the storage platform/platforms can be disposed suspended on a central rotation axis where rotation is provided.

In another possible embodiment of the invention, the cooking device comprises a rotor connecting to the storage platform in a manner that giving rotational motion to the storage platform and providing the dehydrating apparatus rotation in the cooking chamber. Thus, the heat reaches to the foodstuffs homogeneously by rotating the foodstuffs around its own axis that is provided irrespective of where or how the heating equipment and fans are disposed within the cooking device.

The invention concerns a use of a rotatable storage platform in a form of with at least one wire in a drying process of foodstuffs containing moisture at a cooking device having a cooking chamber wherein a dryer air circulated or blown in the cooking chamber.
- Figure 1: is a perspective view from above of the drying apparatus which is the subject matter of the invention.
- Figure 2: is a perspective view from above of another drying apparatus which is the subject matter of the invention.
- Figure 3: is a perspective view from above of another drying apparatus which is the subject matter of the invention.
- Figure 4: is a perspective view from above of another drying apparatus which is the subject matter of the invention.
- Figure 5: is a perspective view from above of another drying apparatus which is the subject matter of the invention.
- Figure 6: is a perspective view from the front of another drying apparatus which is the subject matter of the invention.
- Figure 7: is a perspective view from the front of a carrying member with another drying apparatus which is the subject matter of the invention.
- Figure 8: is a two-dimensional view, from the front, of a rotor from which the drying apparatus in Figure 7 may be suspended by means of a carrying member.
- Figure 9: is a perspective view from the front of a cooking device equipped with a cooking chamber in which a drying apparatus is to be suspended.
- Figure 10: is a perspective view from the front of a cooking device equipped with a cooking chamber with a support element which is an alternative embodiment upon which the drying apparatus may be positioned.

The invention is a domestic cooking device (1) equipped with one or more dehydrating apparatuses (30) storing foodstuff containing moisture within the cooking chamber (11) and providing uniform dehydration and increasing contact of the drying air with the foodstuff. "Dehydration" is a process of removal of most of the free water inside foodstuff while keeping significant amount of nutrients. The removal of free water reduces the water activity value of the foodstuff which increases, the foodstuff's resistance to microorganisms. The dehydrating phenomenon is the difference between the vapor pressure of the water, and the "partial water vapor pressure" in the ambient air. The vapor pressure of the water increases as the temperature increases. If there are substances dissolved in the water or if the water is bound to a substance, the vapor pressure of the water falls. Due to capillary force, the vapor pressure of the water falls as the capillary diameter reduces.

Foodstuffs which are to be dehydrated within the cooking device (1) are solid-type foodstuffs. Solid foodstuffs may be dried as a whole or chopped.

Dryable foodstuffs include vegetables such as peppers, green beans, aubergines, or okra, and fruits such as apples, pears, bananas and the like. The quantity of water which must be removed varies depending on the type of foodstuff to be dried, and the aim is that drying within a cooking device (1) will reduce moisture to levels of 10-15%. The temperature of the drying air within the cooking chamber (11) is between 40-90°C. The adjustment buttons (15) on the cooking device (1) are used to adjust the dehydrating and the dehydrating temperature.

Below, a sample table is given for aubergine and red pepper as examples of foodstuffs to be dehydrated. Each of the foodstuffs which are to be dried has a separate drying process. However, those which can be dehydrated within the same temperature range and dehydrating time may be included in the same dehydrating process and may be dehydrated at the same time within the cooking chamber (11).

**Table 1**

| Foodstuff type | Temperature Range (°C) | Dehydrating time |
|---|---|---|
| Sliced aubergine | 70-80 | 8-10 (hours) |
| Red pepper | 70 | 12 (hours) |

As may be seen in Table 1, the dehydratingtemperature range and duration vary depending on the type of the food which is to be dehydrated, and whether or not it has been chopped.

The dehydrating apparatus (30) of the cooking device (1) which is the subject matter of the invention is disposed within the cooking chamber (11) to ensure that the drying air comes into effective contact with each surface of the foodstuffs. The dehydrating apparatus (30) has at least one storage platform (31) on which dryable foodstuffs may be stored, or from which they may be hung.

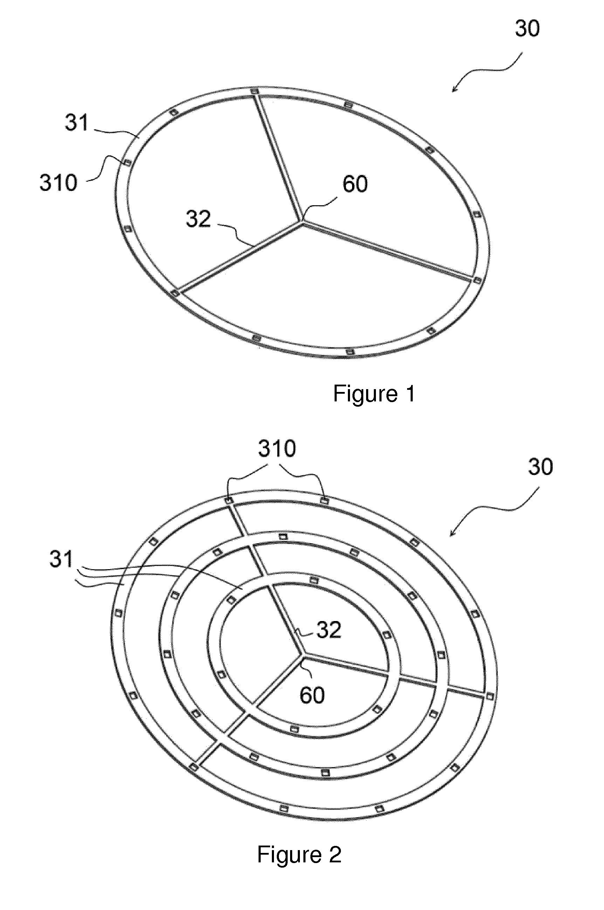

The dehydrating apparatus (30) with at least one storage platform (31) which is the subject matter of the invention is shown in Figures 1, 2, 3, 4, 5 and 6. Figure 1 shows an embodiment which includes a three-armed support extension (32) which will provide the connection of the dehydrating apparatus (30) which is the subject matter of the invention to a storage platform (31), and a carrying element (20) which centers the storage platform (31) within the cooking chamber (11). A large number of openings (310) have been formed on the hoop-shaped storage platform (31). The foodstuff is connected to the storage platform (31) through these openings (310). A hook, latch or similar arrangement may be used for hanging the foodstuffs. Figure 2 is an alternative embodiment of the dehydrating apparatus (30) given in Figure 1. The embodiment which is the subject matter of the invention has more than one storage platform (31) positioned concentrically at defined intervals on the support extension (32). A large number of openings (310) have been formed at intervals on each storage platform (31).

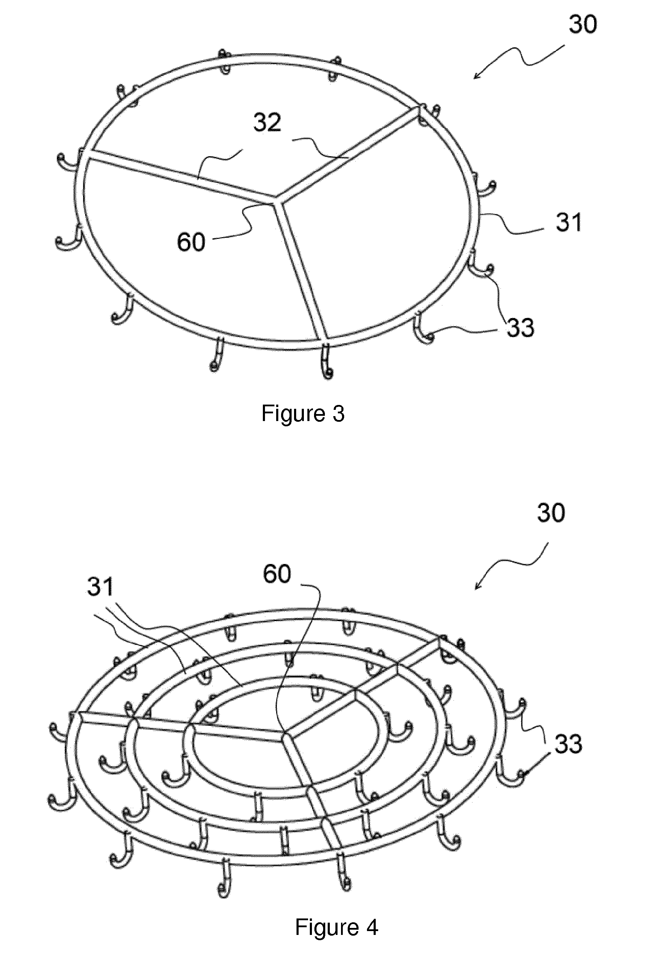

In Figure 3, the dehydrating apparatus (30) which is the subject matter of the invention is in a form similar to that in Figure 1. It differs in that a large number of hooks (33) are located at defined intervals on a circular storage platform (31). Figure 4 is an alternative embodiment of the dehydrating apparatus (30) with multiple storage platforms (31) shown in Figure 3. Hooks (33) have been formed on each storage platform (31).

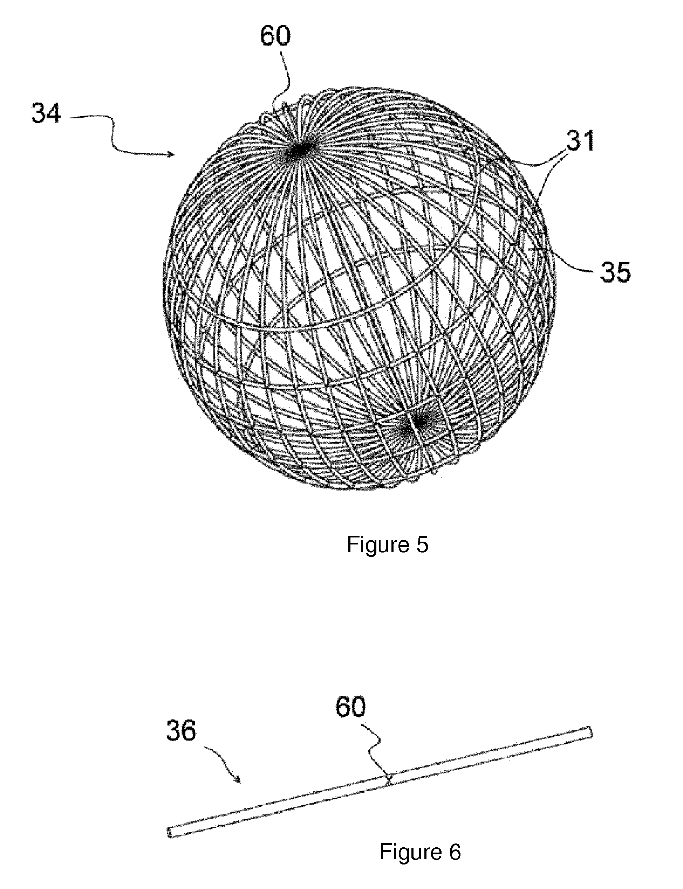

Figure 5 is another alternative embodiment of the dehydrating apparatus (30) which is the subject matter of the invention. The dehydrating apparatus (30) is embodied in the form of a sphere. The sphere is built with storage platforms (31) in the form of wire with predefined spaces (35) between them. The spheric form was produced by the attaching storage platforms (31) to each other. The foodstuffs which are to be dehydrated are spread over the storage platforms (31) or hung by hooks. In an alternative embodiment thereof, the sphere-shaped dehydrating apparatus (30) is opened, and the foodstuffs which are to be dried are stored or hung within the sphere. In another alternative embodiment, rods (36) may be passing through the wires of the cage (34).

In Figure 6, the dehydrating apparatus (30) is a storage platform (31) in a rod form. The storage platform (31) in the form of a rod is suspended within the cooking chamber (11) by means of a carrying element (20) from a fulcrum (60) determined according to the center of gravity once the foodstuffs have been hung on the storage platform (31).

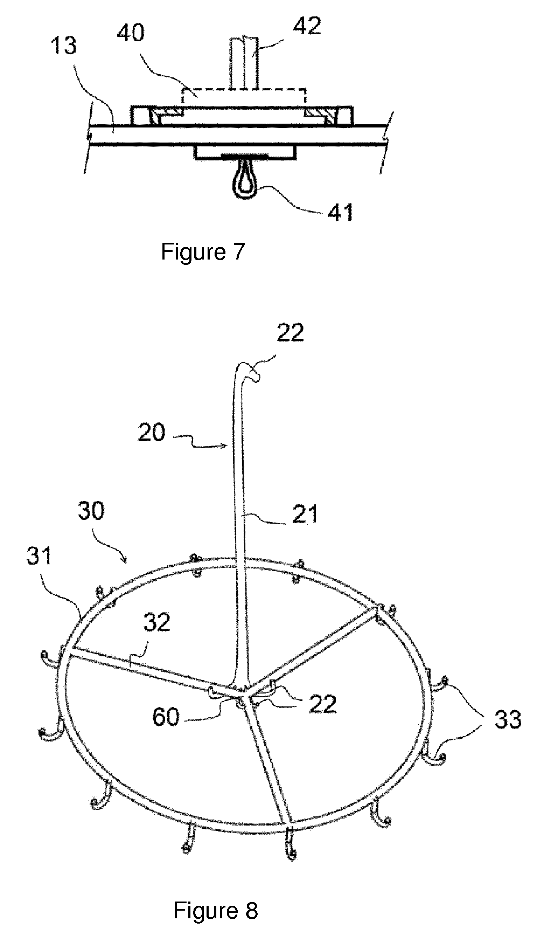

Figure 7 is a representative view of a subject matter dehydrating apparatus (30) connected to a carrying element (20). As shown in the figure, the carrying element (20) is connected to a support extension (32) of the hanger (31). For this purpose, the connected end of the carrying element (20) is attached via the fulcrum (60) which will support the storage platform (31) from the support extension (32) in a balanced manner. In one embodiment of the carrying element (20), the end section which is to be connected includes three bent sections (22) to which it may be connected by the three arms of the support extension (32). The other end of the carrying element (20) also preferably has a bent section (22). An extension (21) has been formed between the two ends. In alternative embodiments of the invention, the length of the extension (21) can be shorter or longer. In this way, the position of the dehydrating apparatus (30) within the cooking chamber (11) can be adjusted.

Carrying elements (20 provide the dehydrating apparatus (30) to be suspended from a top wall (13) of the cooking chamber (11). In an alternative embodiment, the dehydrating apparatus (30) may be held stationary with carrying elements (20) connected to the side walls of the cooking chamber (11), or it can be rotated.

In an embodiment of the drying apparatus (30), which can be suspended from the top wall (13), a hanger (41) attached to the top wall (13) is used as shown in Figure 8. The hanger (41) may be fixed to the top wall (13) of the cooking chamber (11) or it may be rotated by means of a rotor (40). For this purpose, a shaft (42) move with a rotational force transmitted from a rotor (40) is mounted directly to a hanger (41).

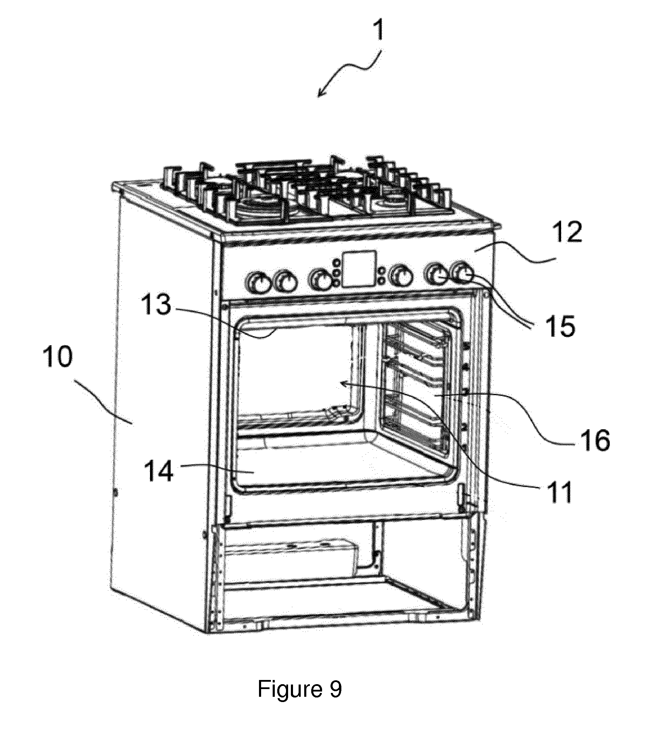

Figure 9 is a perspective view from the front of subject matter cooking device (1) equipped with the dehydrating apparatus (30).. In the figure, the door of the cooking device (1) is removed to reveal the cooking chamber (11). The cooking chamber (11) can be formed within the body (10) of the cooking device (1) in various configurations. A control panel (12) has been provided on the visually accessable part of the front wall of the cooking device (1). Drying or cooking adjustments can be made with the adjustment buttons (15) on the control panel (12). Meanwhile, temperature adjustments can be made on the cooktop integrated into the cooking device (1) using other adjustment buttons (15).

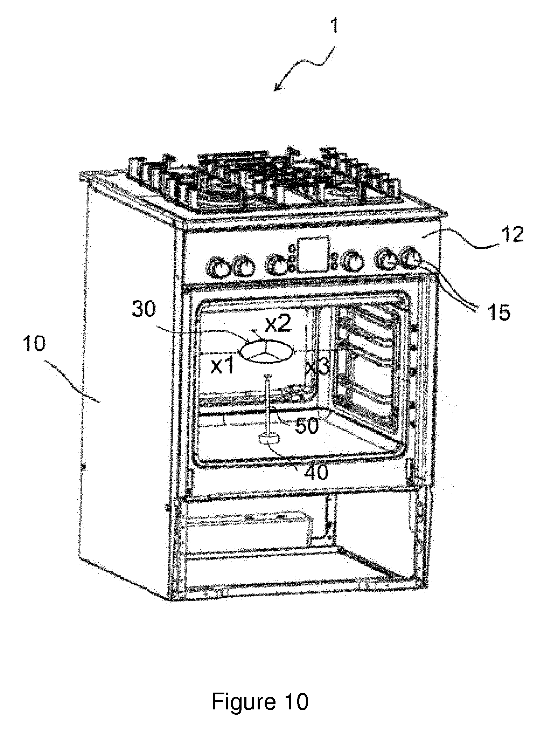

Figure 10 shows an alternative embodiment of the cooking device (1) equipped with a support (50) which supports a dehydrating apparatus (30) from below. The support (50) is adjusted at a bottom wall (14) of the cooking chamber (11). The support (50) can support the dehydrating apparatus (30) from below in a fixed manner, but can also ensure its rotation with the assistance of a rotor (40).

The dehydrating apparatus (30) is arranged within the cooking chamber (11) at predefined distance from each of the wall of the cooking chamber (11) so that it does not touch the walls. In order to achieve this, there can be distances of a fixed x or a variable x1, x2, x3 between the side and rear walls of the cooking chamber (11) and the outermost storage platform (31) of the drying apparatus (30). Thus, positioning the dehydrating apparatus (30) with a distance to the walls, top wall (13) and bottom wall (14) of the cooking chamber (11) irrespective of where or how the heating equipment and fans are positioned within the cooking device (1), ensure an efficient hot air circulation. Additionally, homogeneous heat transmission to the foodstuffs is ensuredby rotation of foodstuff on their own axis.

More detailed explanation of the operation of the invention is as follows. One or more dehydrating apparatuses (30) can be located inside the cooking chamber (11) of a cooking device (1). The foodstuffs which are to be dried are previously sliced or as a whole. The desired form may be applied to each foodstuff. If the foodstuff is in a form which may be folded and hung, it may be spread out on the storage platform (31). If it is not in a form which may be spread out, or if this is not what is desired, the foodstuffs may be hung on hooks (33).

The foodstuffs which are to be dried may be hung up and spread out on the storage platform (31), or may be hung on support extensions (32), or may be hung in both ways on the drying apparatus (30).

Foodstuffs generally hung by means of hooks (33) on the storage platforms (31) of the drying apparatus (30). When foodstuffs are hung on the drying apparatus (30), they are form a row. At the same time, the position of the dehydrating apparatus (30) within the cooking chamber (11) may be adjusted in such a manner that distance (x) remains between the dehydrating apparatus (30) and the walls of the cooking chamber (11).

Due to the form of dehydrating apparatuses (30) in a wire or spaced with wide openings in between, it is ensured that the drying air passes over or through the drying apparatus (30). The drying air is blown or circulated within the cooking chamber (11) depending on the structure and adjustment of the cooking device (1).

The position of the dehydrating apparatus (30) within the cooking chamber (11) is stable. Where necessary, the dehydrating apparatus (30) can be freely rotated on its own axis by rotational force shifted manually. In another embodiment of the invention, the dehydrating apparatus (30) can be rotated with the movement of a rotor (40) from the top wall (13) or from the bottom wall (14) or from both. A rotation axis of the drying apparatus (30) is perpendicular to the transverse direction of the cooking chamber (11).

Drying adjustment can be made using the adjustment buttons (15) of the control panel (12).

In alternative embodiments of the invention, the geomethry of the storage platform (31) of the dehydrating apparatus (30) may differ. The storage platform (31) can be formed in such shapes as a square, rectangular or triangle.

In alternative embodiments of the invention, the dehydrating apparatus (30) may be pivoted from the side walls of the cooking chamber (11). Rotational force can be applied while it is suspended.

### Reference Numbers

1. Cooking device
10. Body
11. Cooking chamber
12. Control panel
13. Top wall
14. Bottom wall
15. Adjustment button
16. Wall

20. Carrying element
21. Extension
22. Bent section
30. Dehydrating apparatus
31. Storage platform

310. Opening
32. Support extension
33. Hook
34. Cage
35. Space
36. Rod
40. Rotor
41. Hanger
42. Shaft
50. Support
60. Fulcrum

## Claims

1. A cooking device (1) particularly a household oven to dehydrate moisture containing foodstuff (40) disposed in a cooking chamber (11) by means of dryer air circulated or blown in the cooking chamber (11) in a dehydration mode at the cooking chamber (11) surrounded by an outer body (10) **characterized by** a dehydrating apparatus (30) in the cooking chamber(11), having at least one storage platform (31) in a wire form and positioned to keep a distance (x) with the walls (16) of the cooking chamber (11) and rotatable inside the cooking chamber (11) from a fulcrum (60), so that providing efficient surface contact of drying air to dryable foods.

2. A cooking device (1) according to claim 1, wherein the storage platform (31) of the dehydrating apparatus (30) is detachable inside the cooking chamber (11).

3. A cooking device (1) according to any of the preceding claims, wherein the fulcrum (60) of the storage platform (31) of the dehydrating apparatus (30) having the foodstuffs arranged in order, is a centre of gravity.

4. A cooking device (1) according to any of the preceding claims, wherein the storage platform (31) comprises a number of openings (310) providing to hang the foodstuffs thereon.

5. A cooking device (1) according to any of the preceding claims, wherein the storage platform (31) comprises a number of hooks (33) providing to hang the foodstuffs thereon.

6. A cooking device (1) according to any of the preceding claims, wherein the storage platform (31) is a hanger.

7. A cooking device (1) according to any of the preceding claims, wherein the storage platform (31) is a rod.

8. A cooking device (1) according to any of the preceding claims, wherein the dehydrating apparatus (30) is in a form of like a cage (34) having a number of gaps (35).

9. A cooking device (1) according to any of the preceding claims, wherein the dehydrating apparatus (30) comprises a carrying element (20) positioning the storage platform (31) in the cooking chamber (11) in a manner connected to the storage platform(s) (31).

10. A cooking device (1) according to claim 9, wherein the carrying element (20) comprises at least one bent part (22) providing to position and hang to at least one storage platform (31) and a projection (21) providing to hang the storage platform (31) in the cooking chamber (11).

11. A cooking device (1) according to any of the preceding claims, wherein the dehydrating apparatus (30) comprises at least one support projection (32) connecting to the carrying element (20) for hanging the storage platform (31).

12. A cooking device (1) according to any of the preceding claims, wherein the cooking device (1) comprises a support (50) providing to position the dehydrating apparatus (30) in a manner supporting from a bottom wall (14) of the cooking chamber (11).

13. A cooking device (1) according to any of the preceding claims, wherein the cooking device (1) comprises a hanger (41) providing to position the dehydrating apparatus (30) in a manner hanging from a top wall (13) of the cooking chamber (11).

14. A cooking device (1) according to any of the preceding claims, wherein the cooking device (1) comprises a rotor (40) connecting to the storage platform (31) in a manner that giving rotational motion to the storage platform (31) and providing the dehydrating apparatus (30) rotation in the cooking chamber (11).

15. Use of a rotatable storage platform (31) in a form of with at least one wire in a drying process of foods containing moisture at a cooking device (1) having a cooking chamber (11) wherein a dryer air circulated or blown in the cooking chamber (11).
